# EUROPEAN PATENT APPLICATION

(11) **EP 1 967 936 A2**
(43) Date of publication of application: **10.09.2008**
(21) Application number: 08151850.8
(22) Date of filing: 22.02.2008
(51) Int. Cl.: G05D 23/19, G05D 24/02

(54) **Apparatus and method**

(30) Priority: 23.02.2007 IT MO20070058
(71) Applicant: Euromeccanica S.r.l., 41053 Maranello (MO) (IT)
(72) Inventor: Sichi, Marco, 41028, Serramazzoni (MO) (IT); Pasquetto, Stefano, 41042, Spezzano (MO) (IT)
(74) Representative: Crugnola, Pietro

(57) **Abstract**

An apparatus for stabilising the rheological parameters of a liquid ceramic glaze (2) that is associable with a decorating machine for decorating tiles (3) comprises detecting means (14) for detecting an effective temperature value (T_{eff}) of said glaze (2) and for sending a signal corresponding to said detected effective temperature value (T_{eff}) to controlling means (22), in which are settable a minimum temperature value (Tₘᵢₙ) and a maximum temperature value (Tₘₐₓ), said controlling means (22) being arranged, when said effective temperature value (T_{eff}) is not comprised between said minimum temperature value (Tₘᵢₙ) and said maximum temperature value (Tₘₐₓ), to operate heat exchangers means (8) to return said effective temperature value (T_{eff}) between said minimum temperature value (Tₘᵢₙ) and said maximum temperature value (Tₘₐₓ).

## Description

The invention relates to an apparatus and a method for stabilising the rheological parameters of a liquid ceramic glaze for decorating tiles.

Apparatuses are known for stabilising the rheological parameters of a liquid ceramic glaze, comprising a container for receiving the glaze.

The container is connected by an inlet conduit and an outlet conduit to a decorating machine.

These apparatuses further comprise a mixer positioned in the aforesaid container, to prevent the liquid ceramic glaze from sedimenting in, and to make homogeneous the temperature of the liquid ceramic glaze inside, the aforesaid container. Known apparatuses further comprise Peltier cells, provided with a first part associated with a bottom portion of the aforesaid container.

Peltier cells are arranged for cooling/heating the container and consequently the liquid ceramic glaze contained therein. Known apparatuses are further provided with radiators and fans for dissipating the heat generated in a second part of the Peltier cells, opposite the aforesaid first part.

In these apparatuses, the liquid ceramic glaze flows via the inlet conduit from the decorating machine to the container.

In the container, the mixer maintains the liquid ceramic glaze mixed and Peltier cells cools/heats the liquid ceramic glaze.

Lastly, the suitably cooled/heated liquid ceramic glaze flows via the outlet conduit from the container to the decorating machine.

Known apparatuses, although they have introduced the concept of lowering/raising the temperature of the liquid ceramic glaze, do not allow to control the rheological parameters of the liquid ceramic glaze itself, i.e., in particular, a temperature value and a density value of the liquid ceramic glaze.

An object of the invention is to improve the apparatuses and the methods for stabilising the rheological parameters of a liquid ceramic glaze.

A further object is to provide apparatuses and methods for controlling the rheological parameters of a liquid ceramic glaze, such as, for example, temperature and density.

In a first aspect of the invention, there is provided an apparatus for stabilising the rheological parameters of a liquid ceramic glaze associable with a decorating machine for decorating tiles comprising detecting means for detecting an effective temperature value of said glaze and for sending a signal corresponding to said detected effective temperature value to controlling means, in which a minimum temperature value and a maximum temperature value are settable, said controlling means being arranged, when said effective temperature value is not comprised between said minimum temperature value and said maximum temperature value, to operate heat exchangers means to return said effective temperature value between said minimum temperature value and said maximum temperature value.

In a second aspect of the invention, there is provided a method for stabilising the rheological parameters of a liquid ceramic glaze comprising detecting an effective temperature value of said glaze, checking that said effective temperature value is comprised between a minimum temperature value and a maximum temperature value and, when said effective temperature value is not comprised between said minimum temperature value and said maximum temperature value, varying the temperature of said glaze to return said effective temperature value between said minimum temperature value and said maximum temperature value.

Owing to these aspects of the invention, it is possible to provide an apparatus and a method for stabilising the rheological parameters of a liquid ceramic glaze that enables said effective temperature value of said glaze to be controlled.

The invention can be better understood and implemented with reference to the attached drawings that illustrate some embodiments thereof by way of non-limiting example, wherein:
Figure 1 is a schematic view of an apparatus for stabilising the rheological parameters of a liquid ceramic glaze in a first embodiment;
Figure 2 is a schematic view of the apparatus in Figure 1 in a second embodiment.

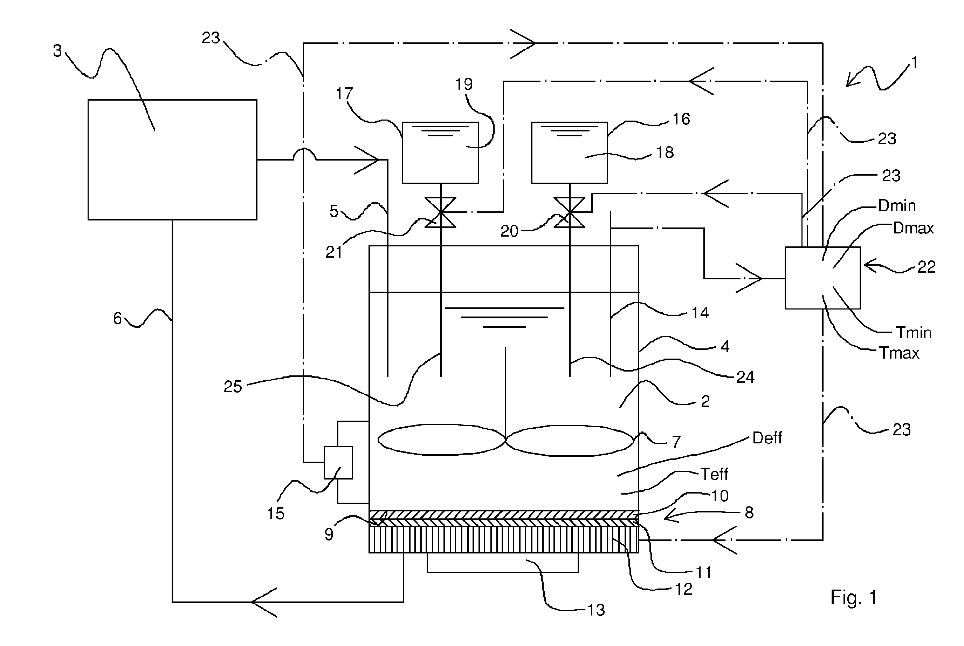

With reference to Figure 1 there is shown an apparatus 1 for stabilising the rheological parameters of a liquid ceramic glaze 2.

The apparatus 1 is associated with a decorating machine 3 for decorating tiles, which are not shown, and comprises a container 4 for containing the glaze 2 connected to the decorating machine 3 by an inlet conduit 5 and an outlet conduit 6.

Inside the container 4 is further positioned a mixer 7 which is arranged for preventing the glaze 2 from sedimenting in, and for making homogeneous the temperature of the glaze 2 inside, the aforesaid container 4.

The apparatus 1 further comprises Peltier cells 8 arranged for cooling/heating the container 4 and consequently the glaze 2 contained therein.

The Peltier cells 8 comprise a first part 10 positioned in contact with a bottom wall 9 of the container 4 and a second part 11 facing radiators 12 and fans 13 arranged for dissipating the heat generated in the container 4.

The apparatus 1 further comprises a temperature sensor 14 immersed in the glaze 2 and arranged for detecting an effective temperature value T_{eff} of the glaze 2 in the container 4.

The apparatus 1 further comprises a densimeter 15, for example a mass densimeter, arranged for measuring an effective density value D_{eff} of the glaze 2 in the container 4.

The apparatus 1 further comprises a first tank 16 and a second tank 17 connected to the container 4 by a first conduit 24 and a second conduit 25 and arranged respectively for containing a first substance 18, or vehicle, and a second substance 19, or fresh glaze, having respectively a lesser or greater density than the glaze 2.

The first tank 16 and the second tank 17 respectively comprise first dosing means 20 and second dosing means 21 for dosing desired quantities respectively of the first substance 18 and of the second substance 19 in the container 4.

The apparatus 1 further comprises a control unit 22 in which are settable a minimum temperature value Tₘᵢₙ, a maximum temperature value Tₘₐₓ, a minimum density value Dₘᵢₙ and a maximum density value Dₘₐₓ of the glaze 2, this control unit 22 being connected by communication lines 23 to the temperature sensor 14, to the densimeter 15, to the first dosing means 20 and to the second dosing means 21.

The control unit 22 is arranged, when the effective temperature value T_{eff} is not comprised between the minimum temperature value Tₘᵢₙ and the maximum temperature value Tₘₐₓ, for operating the Peltier cells 8 to return the effective temperature value T_{eff} between the minimum temperature value Tₘᵢₙ and the maximum temperature value Tₘₐₓ, and, when the effective density value D_{eff} is not comprised between the minimum density value Dₘᵢₙ and the maximum density value Dₘₐₓ, to operate the first dosing means 20 or the second dosing means 21 to return the effective density value D_{eff} between the minimum density value Dₘᵢₙ and the maximum density value Dₘₐₓ.

The operation of the apparatus 1 with reference to Figure 1 is disclosed below.

The temperature sensor 14 sends to the control unit 22 a signal corresponding to the detected effective temperature value T_{eff} of the glaze 2, and the densimeter 15 sends a further signal corresponding to the detected effective density value D_{eff} of the glaze 2.

The control unit 22 checks that the detected effective temperature value T_{eff} is comprised between the minimum temperature value Tₘᵢₙ and the maximum temperature value Tₘₐₓ and that the detected effective density value D_{eff} is comprised between the minimum density value Dₘᵢₙ and the maximum density value Dₘₐₓ.

If the detected effective temperature value T_{eff} is not comprised between the minimum temperature value Tₘᵢₙ and the maximum temperature value Tₘₐₓ, the control unit 22 operates the Peltier cells 8, which return the effective temperature value T_{eff} between the minimum temperature value Tₘᵢₙ and the maximum temperature value Tₘₐₓ.

In particular, when the detected effective temperature value T_{eff} is greater than the set maximum temperature value Tₘₐₓ, the Peltier cells 8 cools the glaze 2, whilst, when the detected effective temperature value T_{eff} is lesser than the set minimum temperature value Tₘᵢₙ, the Peltier cells 8 heats the glaze 2.

On the other hand, if the detected effective density value D_{eff} of the glaze 2 is not comprised between the minimum density value Dₘᵢₙ and the maximum density value Dₘₐₓ, the control unit 22 operates the first dosing means 20 or the second dosing means 21, which return the effective density value D_{eff} between the minimum density value Dₘᵢₙ and the maximum density value Dₘₐₓ.

In particular, when the detected effective density value D_{eff} is greater than the set maximum density value Dₘₐₓ, the control unit 22 operates the first dosing means 20, which adds to the glaze 2 a desired quantity of the first substance 18, whilst, when the detected effective density value D_{eff} is lesser than the set minimum density value Dₘᵢₙ, the control unit 22 operates the second dosing means 21, which adds to the glaze 2 a desired quantity of the second substance 19.

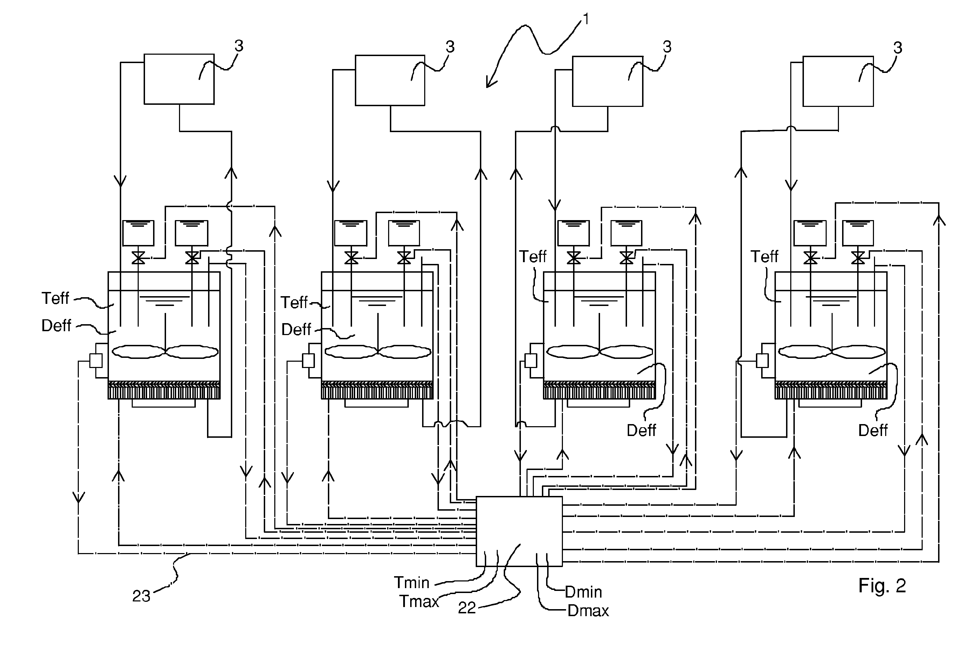

With reference to Figure 2, there is shown a plurality of containers 4, each containing a glaze 2 of a different colour and connected to respective decorating machines 3.

In this case, the rheological parameters of the glazes 2 contained in the respective containers 4, and in particular the effective temperature T_{eff} and density D_{eff} values, are controlled by a single control unit 22.

It should be noted how the aforesaid apparatus 1 and the aforesaid method not only enable the glaze 2 to be cooled/heated but also enable an effective temperature value T_{eff} and an effective density value D_{eff} of the glaze 2 to be controlled.

The control unit 22 comprises interface means that enables the control unit 22 to be connected to a control electric panelboard of the decorating machine 3.

The control unit 22 further comprises a video terminal, which is not shown, for example of the touchscreen type, by means of which it is possible to display the effective temperature values T_{eff} and the effective density values D_{eff} of the glaze 2 detected during operation of the apparatus 1 and to set the desired temperature and density values. The video terminal further enables alarm signals to be displayed in the event of an apparatus 1 operating fault.

Both in the embodiment in Figure 1 and in the embodiment in Figure 2, the control unit 22 can be located in a position spaced apart from the decorating machine 3, to control the apparatus 1 from a remote position. Alternatively, the control unit 22 can be connected to a remote control station, which is not shown, in particular a computer.

Owing to these embodiments, it is possible to control remotely an apparatus 1 comprising a container 4 or a plurality of containers 4 or it is possible to control a plurality of apparatuses 1, for example through the information technology network of the company manufacturing the decorated ceramic tiles in which the decorating machines 3 are installed.

In an embodiment that is not shown, the densimeter 15 is positioned on a pipe connected to the outlet 6.

In another embodiment that is not shown, the first dosing means 20 and/or the second dosing means 21 comprises pump means for sending respectively the first substance 18 and/or the second substance 19 to the container 4. The pump means may comprise a diaphragm pump.

Further pump means, for example a further diaphragm pump, can be connected to the outlet 6 to supply the decorating machine 3 with the glaze 2.

The apparatus 1, in particular the container 4, can be mounted on a carriage, which is not shown, that enables the apparatus 1 to be easily brought to the decorating machine 3 to supply the decorating machine 3 and to move the apparatus 1 away from the decorating machine 3 during cleaning or maintenance of the apparatus 1.

In a further embodiment that is not shown, each container 4 is provided with level sensor means, arranged for detecting a level of the glaze 2 in the container 4. The level sensor means is connected to the control unit 22. The level sensor means comprises a first level sensor arranged near the bottom wall 9, and a second level sensor arranged at a greater height than the first level sensor inside the container 4. The first level sensor is arranged for signalling when the glaze 2 reaches a minimum preset level inside the container 4. The second level sensor is arranged for signalling when the glaze 2 reaches a maximum preset level inside the container 4.

When the level detected by the first level sensor is the same as or lesser than the minimum preset level, or is comprised in a neighbourhood of the minimum set level, for example +/- 5 mm, the control unit 22 operates the first dosing means 20 and the second dosing means 21 that add to the container 4 respectively a quantity of the first substance 18 and a quantity of the second substance 19 to fill the container 4 up to a desired level. The quantity of the first substance 18 and the quantity of the second substance 19 are calculated on the basis of the effective density value D_{eff} and of the effective temperature value T_{eff} of the glaze 2 that is still present in the container 4 before filling of the container 4 and on the basis of the density value of the glaze 2 that it is desired to obtain and which has to be sent to the decorating machine 3.

When the level detected by the second level sensor is the same as or greater than the maximum preset level, or is comprised in a neighbourhood of the preset maximum level, the control unit 22 operates the first dosing means 20 and the second dosing means 21 that stop supplying the container 4 respectively with the first substance 18 and with the second substance 19.

Once the desired level of glaze 2 has been obtained in the container 4, the apparatus 1 modifies, if necessary, the temperature of the glaze 2, as disclosed above.

The glaze 2 may comprise a suspension in water and/or in an organic substance of solid particles having a defined granulometric distribution of the solid particles that is suitable for the operation of the decorating machine 3 and for the decoration to be applied to the ceramic tiles. Generally, the glaze that returns from the decorating machine 3 into the container 4 through the inlet 5 has a granulometric distribution that is different from the glaze that initially supplies the decorating machine 3 through the outlet 6, in particular the glaze that returns from the decorating machine 3 to the container 4 comprises larger solid particles than those of the initial glaze, which is the glaze that is obtained for the first time in the container 4 by pouring the first substance 18 and the second substance 19 thereinto. This is caused by the fact that the decorating machine 3 produces a separating effect on the solid particles comprised in the glaze, i.e. the decorating machine 3 uses the fraction of glaze comprising the smallest particles. This means that, during continuous operation of the apparatus 1, the dimensions of the solid particles comprised in the glaze inside the container 4 could increase and the glaze could become unusable by the decorating machine 3.

Owing to the level sensor means, and in particular to the distance of the first level sensor from the bottom wall 9, it is possible not only to maintain a desired glaze level in the container 4 but also to stabilise the granulometric distribution of the solid particles comprised in the glaze. In fact, by maintaining in the container 4 a level of glaze 2 that is at least equal to the minimum preset level, in the container 4 there is always present, during operation, a certain quantity of glaze 2 in which the larger solid particles of the glaze that comes from the inlet 5 are diluted. The granulometric distribution of the glaze 2 inside the container 4 during operating conditions of the apparatus 1 stabilises around values that, although they are greater than the granulometric distribution of the initial glaze, enable the glaze 2 always to be used by the decorating machine 3, without producing negative effects on the decorating machine 3 or on the decoration.

The position of the first level sensor and of the second level sensor defines the levels of glaze 2 at which the control unit 22 requires the first substance 18 and the second substance 19 to be introduced into the container 4. For example, the first level sensor can be arranged at approximately 6 cm from the bottom wall 9 and the second level sensor can be arranged at approximately 12 cm from the bottom wall 9.

During the restoration of the desired level of glaze 2 in the container 4, the apparatus 1 controls and possibly modifies the value of the density of the glaze 2, as already described above.

The desired rheological parameters of the glaze 2 can be obtained gradually, i.e. by adding in a continuous and gradual manner portions of the first substance 18 and/or portions of the second substance 19. Simultaneously, the mixer 7 can be activated, to obtain a substantially homogenous mixture.

Alternatively, it is possible to obtain the desired rheological parameters for subsequent steps, adding at each step a portion of the first substance 18 and/or a portion of the second substance 19, until the desired values of the rheological parameters have been reached. Also in this case, the mixer 7 can be activated to homogenise the aforesaid portions together and with the glaze 2 that may be present in the container 4. The portion of the first substance 18 and the portion of the second substance 19 to be added at each step can be set by the control unit 22, for example by an operator.

As the viscosity of a fluid is influenced by the temperature and by the density of the fluid, owing to the control of the temperature and the density of the glaze 2 in the container 4, the apparatus enables even the viscosity of the glaze 2 to be maintained within acceptable values for using the glaze 2 in a decorating machine 3.

Owing to the apparatus 1, it is possible to maintain the effective temperature value T_{eff} of the glaze 2 within an interval of approximately +/- 2°C around the desired temperature.

Further, the effective density value D_{eff} can be maintained within an interval of approximately +/- 1 g/100 ml around the desired density.

The control of the rheological parameters enables it to be prevented that the glaze 2 in the container 4 loses the physical features, in particular rheological features, that are necessary for applying the decoration by means of the decorating machine 3. Without the control of the rheological parameters it would be necessary to discard the used glaze, i.e. the glaze contained in the container 4 and that during the supply of the decorating machine 3 has lost the initial rheological properties, and replace such a glaze entirely with new glaze. The apparatus 1 thus enables the discarded glaze to be reduced significantly, if not be eliminated.

The apparatus 1 enables it to be prevented that the rheological parameters of the glaze, which is contained in the container 4 and has to be sent to the decorating machine, undergo variations caused by the heat excursion of the environment in a working day or in a season, by heating of the glaze in the decorating machine - a part of the glaze being returned to the container 4 via the inlet 5, by the possible evaporation of the vehicle of the glaze, by the "sieving" effect performed by the decorating machine, that returns a liquid ceramic glaze comprising larger solid particles.

The decorating machine can be any printing machine for decorating ceramic tiles, for example an intaglio printing, tampographic, rotary silkscreen or flat silkscreen printing machine.

## Claims

1. Apparatus for stabilising the rheological parameters of a liquid ceramic glaze (2) associable with a decorating machine for decorating tiles (3) and comprising detecting means (14) for detecting an effective temperature value (T_{eff}) of said glaze (2) and for sending a signal corresponding to said detected effective temperature value (T_{eff}) to controlling means (22), in which are settable a minimum temperature value (Tₘᵢₙ) and a maximum temperature value (Tₘₐₓ), said controlling means (22) being arranged, when said effective temperature value (T_{eff}) is not comprised between said minimum temperature value (Tₘᵢₙ) and said maximum temperature value (Tₘₐₓ), for operating heat exchangers means (8) to return said effective temperature value (T_{eff}) between said minimum temperature value (Tₘᵢₙ) and said maximum temperature value (Tₘₐₓ).

2. Apparatus according to claim 1, and comprising densimeter means (15) for measuring an effective density value (D_{eff}) of said glaze (2) and for sending a further signal corresponding to said detected effective density value (D_{eff}) to said controlling means (22), in which are settable a minimum density value (Dₘᵢₙ) and a maximum density value (Dₘₐₓ), said controlling means (22) being arranged, when said effective density value (D_{eff}) is not comprised between said minimum density value (Dₘᵢₙ) and said maximum density value (Dₘₐₓ), for operating dosing means (20; 21) for dosing liquid substances (18; 19) to return said effective density value (D_{eff}) between said minimum density value (Dₘᵢₙ) and said maximum density value (Dₘₐₓ).

3. Apparatus according to claim 2, wherein said densimeter means comprises a mass densimeter (15).

4. Apparatus according to any preceding claim, wherein said heat exchangers means comprises Peltier cells (8).

5. Apparatus according to any preceding claim, wherein said detecting means comprises a temperature sensor (14).

6. Apparatus according to any preceding claim, and further comprising level sensor means for detecting a level of said glaze (2) inside a containing cavity (4) suitable for containing said glaze (2).

7. Apparatus according to claim 6, wherein said level sensor means is connected to said controlling means (22), said controlling means (22) being arranged, when said level is not comprised between a minimum level and a maximum level, for operating supplying means (20; 21) for supplying liquid substances (18; 19) to return said level between said minimum level and said maximum level.

8. Apparatus according to any preceding claim, wherein said detecting means is provided in containing means (4) of said glaze (2).

9. Apparatus according to claim 8 as appended to claim 2 or to any one of claims 3 to 7 as appended to claim 2, wherein said densimeter means (15) is connected to said containing means (4).

10. Apparatus according to claim 8, or 9, as claim 8 is appended to claim 6, or 7, wherein said level sensor means comprises a first level, sensor arranged nearer a bottom (9) of said containing means (4) and a second level sensor arranged further from said bottom (9).

11. Apparatus according to any preceding claim, wherein said detecting means (14) comprises a plurality of detectors connected to, and operated by, a single remote control unit (22).

12. Method for stabilising the rheological parameters of a liquid ceramic glaze (2) comprising detecting an effective temperature value (T_{eff}) of said glaze (2), checking that said effective temperature value (T_{eff}) is comprised between a minimum temperature value (Tₘᵢₙ) and a maximum temperature value (Tₘₐₓ) and, when said effective temperature value (T_{eff}) is not comprised between said minimum temperature value (Tₘᵢₙ) and said maximum temperature value (Tₘₐₓ) varying the temperature of said glaze (2) to return said effective temperature value (T_{eff}) between said minimum temperature value (Tₘᵢₙ) and said maximum temperature value (Tₘₐₓ).

13. Method according to claim 12, wherein said varying comprises cooling said glaze (2) when said effective temperature value (T_{eff}) is greater than said maximum temperature value (Tₘₐₓ) .

14. Method according to claim 12, or 13, wherein said varying comprises heating said glaze (2) when said effective temperature value (T_{eff}) is lesser than said minimum temperature value (Tₘᵢₙ).

15. Method according to any one of claims 12 to 14, wherein said detecting comprises measuring an effective density value (D_{eff}) of said glaze.

16. Method according to claim 15, wherein after said measuring is still provided checking that said effective density value (D_{eff}) is comprised between a minimum density value (Dₘᵢₙ) and a maximum density value (Dₘₐₓ).

17. Method according to claim 16, wherein after said further checking, it is provided that, when said effective density value (D_{eff}) is not comprised between said minimum density value (Dₘᵢₙ) and said maximum density value (Dₘₐₓ) , further varying the density of said glaze (2) to return said effective density value (D_{eff}) between said minimum density value (Dₘᵢₙ) and said maximum density value (Dₘₐₓ) .

18. Method according to claim 17, wherein said still varying comprises adding to said glaze (2) a first substance (18) having a lesser density than said glaze (2) when said effective density value (D_{eff}) is greater than said maximum density value (Dₘₐₓ).

19. Method according to claim 17, or 18, wherein said still varying comprises adding to said glaze (2) a second substance (19) having a greater density than said glaze (2) when said effective density value (D_{eff}) is lesser than said minimum density value (Dₘᵢₙ) .

20. Method according to any preceding claim, and further comprising obtaining a measurement of a level of said glaze (2) contained in containing means (4) suitable for containing said glaze (2).

21. Method according to claim 20, wherein after said obtaining is provided, when said level is not comprised between a minimum level and a maximum level, modifying said level to return said level between said minimum level and said maximum level.
